# NEW EUROPEAN PATENT SPECIFICATION

(11) **EP 2 005 838 B2**
(45) Date of publication and mention of the opposition decision: **19.02.2020**
(45) Mention of the grant of the patent: 12.08.2009
(21) Application number: 07110026.7
(22) Date of filing: 12.06.2007
(51) Int. Cl.: A23L 23/10, A23L 19/10, A23L 23/00

(54) **Packaged cencentrate for preparing a bouillon, soup, sauce, gravy or for use as a seasoning, the concentrate comprising konjac mannan**
Abgepacktes Konzentrat zur Zubereitung von Bouillon, Suppe, Sauce, Tunke oder zur Verwendung als Würze sowie das Konzentrat mit Konjac-Mannan
Concentré conditionné pour la préparation de bouillon, soupe, sauce, jus ou en tant qu'assaisonnement, ledit concentré contenant du konjac mannan

(43) Date of publication of application: 24.12.2008
(73) Proprietor: Unilever N.V., 3013 AL Rotterdam (NL); Unilever PLC, London EC4Y 0DY (GB)
(72) Inventor: Inoue, Chiharu, c/o Unilever R&D Vlaardingen B.V., 3133 AT Vlaardingen (NL); Suenram, Wiebke, c/o Unilever Bestfoods Deutschland GmbH, 74074 Heilbronn (DE)
(74) Representative: Tjon, Hon Kong Guno

(56) References cited:
- EP-A- 1 481 595
- EP-A1- 0 981 970
- EP-A1- 1 481 595
- EP-A2- 0 970 620
- WO-A-96/02152
- WO-A1-00/70970
- WO-A1-01/72148
- WO-A1-95/05751
- WO-A1-2005/074717
- WO-A1-2007/013146
- DE-T2- 69 311 490
- JP-A- S56 169 559
- JP-A- S60 196 165
- JP-A- 2002 335 899
- US-A- 3 044 503
- US-A- 4 676 976
- US-A- 4 746 526
- US-A- 4 746 528
- US-A- 4 943 444
- US-A- 5 695 800
- US-A1- 2006 286 256
- US-A1- 2007 269 571
- US-B2- 6 391 358
- YOSHIMURA M ET AL: "Rheological studies on mixtures of corn starch and konjac-glucomannan" CARBOHYDRATE POLYMERS, APPLIED SCIENCE PUBLISHERS, LTD. BARKING, GB, vol. 35, no. 1-2, 2 January 1998 (1998-01-02), pages 71-79, XP004126955 ISSN: 0144-8617
- "chapter 25 on Konjac Mannan" In: Phillips, G. et al: "Handbook of hydrocolloids", 2000
- Dalbe, B.: "Interactions between xanthan gum and konjac mannan", Gums and Stabilizers for the Food Industry, vol. 6, 1992,
- Williams, P. et al: "Synergetic interaction of xanthan gum with glucomannans", Food Hydrocolloids, vol. 4, no. 6, 1991,
- "chapter 5 on Carrageenan" In: Phillips, G. et al: "Handbook of hydrocolloids", 2000
- Hata, T. et al: Research Relating to Konjac Mannan, no. Reports 1 and 2, 28 February 1950 (1950-02-28),
- Miyoshi, E.: "Effects of Sodium Chloride and Calcium Chloride on the Interaction between Gellan Gum and Konjac Glucomannan", J. Agric. Food Chem., vol. 44, no. 9, 1996,
- Nishinari, K.: "Review of the psycho-chemical characteristics and properties of konjac mannan", Food Hydrocolloids, vol. 6, no. 2, 1992, pages 199-222,
- Images of concentrates prepared according to examples 1a and 1c of EP 2005838 B1
- Experimental report (proprietor)
- Codex Alimentarius
- Carpenter, Dana: "200 low-carb slow cooker recipes", page 17,
- decision of the OD in case EP 07110027.5
- Office communication of the USPTO regarding US 2008/0311247 A1 (parallel US application of the opposes patent)
- claims of US 2008/0311247
- Experimental report dated 20.12.2013 (opponent)
- Picout et al: "Rheology of Biopolymer Solutions and Gels",
- Experimental report dated 06.02.2014 (proprietor)
- Experimental report dated 07.03.2014 (proprietor)
- Product specification SANPRO 1015/SF
- Main properties of CongelK, Andi-Johnson Group
- SCANPRO product catalogue
- Experimental report by TNO, 8.8.2014
- Experimental report by Nestle Product Technology Center, dated 19.12.2014
- "Encyclopedia of Food Science", 1978, The AIV Publishing Company, Inc page 642,
- Further Experimental Evidence, Unilever, dated 23.10.2015
- Specification sheet of Pork Protein 170112 from DPS/Dutch Protein & Services BV, Tiel, Netherlands

## Description

### Field of the invention

The present invention relates to concentrates for preparing a bouillon, broth, soup, sauce, gravy or for use as a seasoning. More in particular, the invention relates to such concentrates in the form of a jelly.

### Background of the invention

Concentrates for preparing a bouillon, broth, soup, sauce, gravy, or for use as seasoning are well known in the western and non-western cooking. For brevity, such formulations are herein all abbreviated to "concentrates for preparing a bouillon", or "bouillon concentrates".

Conventionally, bouillon concentrates comprise ingredients such as one or more of salt, sugar, flavour enhancers (like e.g. monosodium glutamate, MSG), herbs, spices, vegetable particulates, colourants and flavourants, next to e.g. 0-40% (for seasoning cubes 1-60%, for seasonings and bouillon cubes typically 0-20%) fat and/or oil. Salt is usually an ingredient which is present in large amounts, e.g. 5-60%.

The most common physical formats in which such concentrates are available are powders, granulates and cubes or tablets. The powders can be prepared by mixing all ingredients in the proper proportion, optionally followed by granulating to obtain granulates using equipment known in the art. The conventional bouillon and seasoning cubes are prepared by mixing the ingredients, followed by pressing to a cube. Alternatively, cubes or tablets can be prepared by mixing all ingredients followed by extruding and cutting the extrudate. The powders and granulates are generally offered in sachets or jars, the cubes usually individually wrapped and packed in a box.

Liquid concentrates for bouillons, soups, sauces etcetera do also exist. They have the advantage that e.g. liquid extracts or concentrates of herbs, vegetables, meat etcetera can be included.

There is a desire for concentrates for preparing a bouillon, broth, soup, sauce, gravy, or for use as seasoning, which combine some advantages of liquid concentrates (e.g. allowing the use of ingredients which are not fully dried) with some advantages of dry concentrates (e.g. unit dosing).

JP 61/031,068 discloses soup concentrates for use with instant noodles, which soup concentrate is in the form of a jelly, which concentrate needs to be dilluted 5-6 times with water to yield a soup to be consumed or served with noodles. Said jellies are formed with gelatin in combination with one or more of alginate, agar and apple puree. The jellies take 3-6 minutes to dissolve. The jellies disclosed have some disadvantages.

### Summary of the invention

There is a need for (alternative) packaged concentrates for use as seasoning or for preparing a bouillon, broth, soup, sauce, or gravy, which concentrate is in the form of a (packaged) jelly, which jelly can dissolve in boiling water fairly quickly (e.g. a mass of 37 g would dissolve in 1000 ml boiling water in less than 4 minutes, preferably less than 3 minutes). It is also preferred that such jelly has a low tendency to syneresis (water separation), preferably no syneresis, and is preferably an elastic, not too rigid gel (as such will facilitate removal from its packaging; elastic and not too rigid can best be judged by hand-feel). Also it is desired that preferably the gel is easy to manufacture (e.g. not too viscous in preparation, or requiring more complex equipment or processing). Preferably, the concentrates should be such that they allow the usual dilution rates (in e.g. an aqueous liquid such as water) for e.g. bouillons (e.g. as in bouillon cubes) like 1:20-1:50 (i.e. allows for high salt levels in the gel). Also, the product should be fairly stable in transport and storage, which is normally at ambient temperatures, but during which temperatures can rise substantially higher. Preferably, the gel should also have a certain strength: preferably the strength should be such that the force (in gram) necessary for a plunger to penetrate 10 mm in a gel is above 20(g), more preferably above 30(g).

It has now been found that such may be achieved (at least in part) by a packaged concentrate for preparing a bouillon, broth, soup, sauce, gravy or for use as a seasoning, said concentrate comprising:
- 20-80% water (weight % based on total packaged concentrate),
- 0.8% to 4%, preferably 0.9%-2%, more preferably 1-1.5% (weight % based on water content of concentrate) of a gelling agent comprising konjac mannan and optionally one or more other gelling agents,
- 15-30% (weight % based on water content of concentrate, more preferably 15-26%, most preferably 20-26%) of salt,
- 0.5-60% (weight % based on the total composition) of taste imparting components,
and wherein the concentrate has the rheology of a gel (preferably judged when taken out of the packaging).

Water (as amount) is herein to be understood as the total amount of moisture present. The concentration of salt is to be calculated as (amount of salt) / (amount of salt + total moisture). The same is true for other dissolved matter, such as gelling agent (amount gelling agent)/(amount gelling agent + total moisture).

The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way). The packaged concentrate according to the invention (when taken out of the packaging) has the appearance or rheology of a gel as expressed by a ratio of elastic modulus G' : viscous modulus G" of at least 1, preferably at least 3. It can furthermore be preferred that the viscous modulus G" is at least 20 Pa, preferably at least 50 Pa. The method of measuring such is described below.

### Detailed description of the invention

In the formulation as set out above, it can be preferred that the concentrate comprises 20-30% (weight % based on water content of concentrate) salt, even more preferably the concentrate according to the present invention comprises 20-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable. The upper limit of solubility in water of NaCl is around 26% (at room temperature), and hence above this limit some salt crystals may occur. Hence, the amount of salt is preferably (just) below this salt saturation concentration level.

The concentrates can be more or less shape stable: it is not an easily flowable product, but it being a gelled product means it can deform (easily) under pressure. By choosing the amount of konjac and optionally other gelling agent (and the ratio) the desired rheology can be obtained. A balance will need to be found between gels which are firm (usually easy to get out of the packaging) by e.g. increasing the amount of konjac and/or other gelling agent and dissolvability.

Preferably, if another gelling agent is present, such other gelling agent is selected from the group consisting of: agar, carrageenan, xanthan, gellan, starch.

The amount and ratio of konjac and optionally other gum or thickener or gelling agent as required will e.g. depend on the amount of salt in the formulation, and such amounts and ratio can be determined by the person of average skill in the art of gelled food products without undue burden. Typically, when next to konjac one other gelling agent is present, konjac and the other gelling agent are each being present in an amount of 15-85% on the total amount of konjac + other gelling agent, and wherein the amount of konjac is at least 0.5 (weight % based on water content of concentrate).

Typical amounts for konjac are: 0.5-3%, preferanly 0.6-2.5%, more preferably 0.7-2% (weight % based on water content of concentrate). The lower amounts are more typical for lower salt levels (e.g. salt levels of 15%), the higher amounts are more typical for higher salt levels (e.g. 25%).

Typical amounts for agar, carrageenan, xanthan, and gellan as additional gelling agents are: 0.1-2%, 0.4-1.5%, 0.7-1 % (weight % based on water content of concentrate). The lower amounts are more typical for lower salt levels (e.g. salt levels of 15%), the higher amounts are more typical for higher salt levels (e.g. 25%).

Typical amounts for starch as additional gelling agent are: 1-15%, 2-12%, 3-10% (weight % based on water content of concentrate). The lower amounts are more typical for lower salt levels (e.g. salt levels of 15%), the higher amounts are more typical for higher salt levels (e.g. 25%).

In the concentrates according to the invention, it is preferred that the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin. The taste-imparting components may also comprise herbs, vegetables, fruits, meat, fish, crustaceans, or particulates thereof.

Due to the wet nature of the concentrates according to the invention, such taste-imparting components can be in a not completely dried state, yet the concentrate still allows unit dosing. Generally speaking such "wet" ingredients will have a higher quality or higher quality image. Also wet ingredients may be included which do not contribute to taste, but which are there for visual reasons. Such can e.g. be pieces of certain vegetables. Such may be present in the same amount as the taste-imparting components. In the above, where it says "meat" this is to be understood to comprise beef, pork, chicken (and other fowl). Preferably the amount of taste-imparting components as set out above is 1-40% (by weight on the total packed concentrate). The taste-imparting components can be in a not completely dry state (i.e. partially wet), or be completely wet, but also frozen or dry taste-imparting ingredients may be used herein.

The packaged concentrate according to the present invention may further comprising 0.5 to 30% (weight on total concentrate) of a taste enhancer selected from the group of monosodium glutamate, 5'-ribotides, organic acids, or mixtures thereof. It may also be preferred that the packaged concentrate according to the present invention further comprises 1-30%, preferably 1-15% (weight on total packaged concentrate) of emulsified or dispersed oil and/or fat. Salt can also be seen as a taste enhancer, but is herein regarded as a separate category of ingredients.

For the packaged concentrate according to the present invention, it is preferred that the total moisture content of the concentrate is 20-60% by weight (based on the total packed concentrate), preferably 40-60% by weight (based on the total packed concentrate). Also, it is preferred that the packaged concentrate according to the invention has a water activity a_{w} of 0.4 to 0.87, preferably 0.5-0.82, more preferably 0.7-0.78, most preferably 0.7-0.75. Preferably, the pH of the concentrate is between 5 and 9, preferably 5-7.

Depending on the ingredients and processing chosen, the concentrate according to the present invention is shelf stable for at least 3 months when in its intact packaging at ambient temperature. Preferably, the concentrate according to the present invention has an open shelf life of at least 3 months at ambient temperature.

The packaged concentrates according to the present invention are preferably translucent or transparent. This can also make it attractive to choose e.g. packaging which is at least partially transparent.

The invention further relates to a process for the preparation of the concentrates according to the present invention. A process for the preparation may comprise the steps of mixing the ingredients with the water, filling into the packaging (e.g. blister packs or cups or tubs) and closing the packs (e.g. by a seal), whereby preferably a heating step is applied prior to, during or after filling into the packaging, for preservation purposes and/or to facilitate dissolution of ingredients and/or achieving gelation (upon cooling thereafter) of thermoset gels and/or to achieve that certain thickeners/gelling agents are in their appropriate conformation (the latter can be relevant to e.g. xanthan). Alternatively, the (heated) mixture may be poured in moulds, cooled to set. After setting to a gel, the gelled concentrate will have to be removed from the moulds and packaged. It is preferred, however, to manufacture directly into the packaging. It is preferred that the steps of mixing the ingredients with the water, filling into the packaging and closing the packaging, whereby a heating step is applied prior to, and/or during and/or after filling into the packaging.

In the above process, it is preferred that at least part of the heating stage is to a temperature of at least 50°C, but can be at least 80°C, the exact temperature depending on the gelling agent chosen, and such can be determined from the literature by the person of average skill in the art and/or by routine experimentation. Also, it is preferred that the temperature of the mixture during the filling is at least 70°C. When fat is used solid at room temperature, it is preferably melted first before adding to other components.

By manufacturing the packaged concentrates according to the present invention, e.g. by the process as set out above, it was found that concentrates for preparing a bouillon, broth, soup, sauce, gravy or for use as a seasoning could be obtained that are in gel form, are quickly dispersible/dissolvable (e.g. 37 g in less than 4, preferably less than 3, when immersed in 1000 ml boiling water), show a low tendency to syneresis, and can be made in such a way that they can be used in the dillution rates usual for bouillon concentrates (e.g. 1:20-1:50).

Typical shapes in which the product according to the invention may be made comprise shapes such as is in the form of a cube, tablet, pellet, ball, briquette, dragee, cone, truncated cone, or in the shape of (the profile or projection or portrait of) an animal or part thereof (e.g. animal head). Due to the formulation and the subsequent manner of manufacturing, complex shapes are possible.

As the concentrates are jelly-like, they can have a shape. Preferably, the concentrate according to the invention is in the form of a cube, tablet, brick-shape, pellet, ball (sphere), briquette, dragee, egg-shape, or flattened egg-shape. It is herein to be understood that "cubes or tablets" and "unit dose" encompass a wide variety of geometric shapes: next to cubes and tablets also pellets, briquettes, brick-like shapes, etcetera. Each individual gelled concentrate preferably is of a size such that the concentrate has a weight (excluding packaging) of 1 g -10 kg, preferably 2-250 g, more preferably 10-50 g. The portion of the concentrate according to the present invention as packaged is preferably such that the concentrate has a weight excluding packaging) of 1 g -10 kg, preferably 2-250 g, more preferably 10-50 g. The packaging can be e.g. a blister pack or a glass or plastic jar or (sealed) tubs or cups. Preferably, in the packaged concentrate according to the invention the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) concentrate, which are closed with a lid or seal, preferably a seal of sheet-like material).

In the formulation as set out above the concentrate comprises 15-30% (weight % based on water content of concentrate) salt, more preferably the concentrate according to the present invention comprises 15-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable.

The invention further relates to the use of a concentrate as set out above, for preparing a bouillon, broth, soup, sauce, gravy or for use as a seasoning. This may be done by diluting with an aqueous liquid (e.g. water) under application of heat, in e.g. a ratio of 1:15 - 1: 100, preferably 1:20 - 1:70, more preferably 1:20 - 1:50.

The packaged concentrates described herein are preferably non-sweet, which is characterised by a sweetness as an equivalent to a percentage sucrose of lower than 20%, preferably lower than 15%, even more preferably lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g / liter sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners. As used herein, "sweetness index" is a term used to describe the level of sweetness of the dosage form relative to sucrose. Sucrose, defined as the standard, has a sweetness index of 1. For example, the sweetness indices of several known sweet compounds are listed below: Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in "Römpp Lebensmittelchemie, Georg Thieme Verlag, 1995". It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

The texture or rheology desired for the product according to the invention is that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. This ratio should be greater than 1 for a gel. For the given product, a ratio of greater than 1 is suitable. It is preferred, however, that said ratio is greater than 3.

The absolute value of the viscous modus G" is preferably greater than 10 Pa, more preferred greater than 50 Pa. This criterion distinguishes between thin solutions with gel character and a more shape retaining jelly products that are the intended products according to this invention.

The above given values need should be measured under the following circumstances:
- a maturation time of at least 12 h under ambient conditions,
- measurement temperature of 25 °C,
- an oscillatory frequency of 1 rad/s and
- a strain of 1 %.
   This set of parameters refers to a standard oscillatory test conducted with a standard state of the art low deformation rheometer as commercially available from e.g. Bohlin or TA Instruments.

The requirements as stated herein for G' : G" should preferably apply to the whole concentrate, and not just for a part of it. Also, it is preferred that the concentrate does not consist of a solid envelope material covering core. It can also be preferred that the concentrate is translucent and/or transparent.

The concentrate according to the present invention is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity a_{w} and pH of the composition may ensure such.

The invention further relates to the use of the concentrate according to the present invention and as set out above for preparing a bouillon, broth, soup, sauce, gravy or for use as a seasoning. Such use e.g. implies removing the concentrate from its packaging, and adding it to food or a dish, either during or after its preparation, optionally further applying heat and/or stirring the food or dish with such concentrate.

### Examples

### Example 1a

### Ingredients

Water: 254.3 g
Pork fat, 81 g
Salt, 83 g
Pork protein 34.3 g
Sugar, 23.1 g
MSG, 13.9 g
Pork flavour (dissolvable powder), 7 g

The above mixture was made in a gel with 2.72 g konjac (CongelK J-28B, Refined & Deodorized Konjac Flour, supplier: Andi-Johnson Konjac CO.Ltd., China) (i.e. 1.06% konjac, based on water) using the processing described below. This gel (at 24.6% salt on water) was submitted to a series of measurements.

### Processing:

### Process Description:

1. Mix all dry ingredients in a Hobart Mixer until homogeneous
2. Melt fat at 60°C
3. Add water into a double jacket vessel (Unimix type) and close the vessel.
4. Add mix into the vessel.
5. Add Melt fat into the vessel.
6. Heat up to 90°C while stirring
7. Keep at 90°C for 3min while stirring
8. Hot filling into containers, followed by sealing and leaving to cool to room temperature

The gel strength was measured using the following method:
- using a texture analyser from Microstable Sytems, model TA XT2 with 5 kg load cell.
- Plunger: Diameter (according AOAC method) 0.5 inches means 12.7 mm, height 35 mm, plane surface, sharp edges, material plastics.
- Sample Containers used were glass jars (diameter 7 cm; height 4 cm).
- After preparation, samples have been stored at ambient conditions (21°C) at least over night before measurement.
- TA-Parameters: Pre speed 1 mm/s, Test speed 0.5 mm/s, Re speed 10 mm/s, Distance 15 mm, Trigger Auto, Force 0.5 g, Stop recording at target. Result we take from the recorded graph is force at 10 mm penetration depth (should be in N, but simplified in g).

G' and G" were measured as described in the description.

Dissolution was meaured by immersion 37 g in 1000 ml boilling water, and measuring the time it takes to dissolve this 37g under stirring.

### Example 1b.

The same dry mix as under 1a was now gelled with 1.7 g konjac (same origin as in example 1a), in combination with 1.02 g agar.

### Example 1c.

The same dry mix as under 1a was now gelled with 1.8 g konjac (same origin as in example 1a), in combination with 1.8 g carrageenan.

### Example 1d.

The same dry mix as under 1a was now gelled with 1.7 g konjac (same origin as in example 1a), in combination with 1.7 g xanthan.

### Example 1e.

The same dry mix as under 1a was now gelled with 2.04 g konjac (same origin as in example 1a), in combination with 1.02 g gellan.

### Example 1f.

The same dry mix as under 1a was now gelled with 2.04 g konjac (same origin as in example 1a), in combination with 10.2 g native corn starch.

All examples 1a-1f had low syneresis.

**Results examples (G' and G" at 20°C, ambient, as measured following the instructions in the description):**

| Example | Storage modulus G' (Pa) | Loss modulus G" (Pa) | Ratio G'/G" | a_{w} | Dillution rate | Dissoln. time (s) | syneresis | Gel strength plunger (g) |
|---|---|---|---|---|---|---|---|---|
| 1a | > 6945 | > 1381 | > 5.0 | 0.76 | 1:27 | 200 | low | 43.7 |
| 1b | > 889 | > 226 | > 3.9 | 0.76 | 1:27 | 100 | low | 19.1 |
| 1c | > 683 | > 190 | > 3.6 | 0.76 | 1:27 | 110 | low | 16.6 |
| 1d | > 759 | > 60.3 | > 5.7 | 0.76 | 1:27 | 160 | low | 152.1 |
| 1e | > 4817 | > 1090 | > 4.2 | 0.76 | 1:27 | 140 | low | 28.3 |
| 1f | > 969 | > 227 | > 4.0 | 0.76 | 1:27 | 170 | low | 46.3 |

## Claims

1. Packaged concentrate for preparing a bouillon, broth, soup, sauce, gravy or for use as a seasoning, said concentrate comprising:
- 20-80% water (weight % based on total packaged concentrate),
- 0.8% to 4%, preferably 0.9%-2%, more preferably 1-1.5% (weight % based on water content of concentrate) of a gelling agent comprising konjac mannan and optionally one or more other gelling agents,
- 15-30% (weight % based on water content of concentrate), of salt,
- 0.5-60% (weight % based on the total composition) of taste imparting components and wherein the concentrate has the rheology of a gel.

2. Packaged concentrate according to claim 1, wherein the concentrate has the appearance or rheology of a gel as expressed by a ratio of elastic modulus G' : viscous modulus G" of at least 1, preferably at least 3.

3. Packaged concentrate according to any of claims 1-2, wherein viscous modulus G" is at least 10 Pa.

4. Packaged concentrate according to any of claims 1-3, wherein the one or more other gelling agents are selected from the group consisting of: agar, carrageenan, xanthan gellan, starch.

5. Packaged concentrate according to any of claims 1-4, wherein next to konjac mannan one other gelling agent is present, konjac mannan and the other gelling agent each being present in an amount of 15-85% on the total amount of konjac mannan + other gelling agent, and wherein the amount of konjac mannan is at least 0.5% (weight % based on water content of concentrate).

6. Packaged concentrate according to any of claims 1-5, wherein the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin and/or herbs, vegetables, fruits, meat, fish, crustaceans, or particulates thereof.

7. Packaged concentrate according to any of claims 1-6, wherein the total water content of the concentrate is 40-60% by weight (based on the total packaged concentrate).

8. Packaged concentrate according to any of claims 1-7, wherein the concentrate has a water activity a_{W} of 0.5 to 0.87, preferably 0.7-0.78.

9. Packaged concentrate according to any of claims 1-8, wherein the concentrate further comprises 1-30%, preferably 1-15% (weight % based on total packaged concentrate) of emulsified oil and/or fat.

10. Packaged concentrate according to any of claims 1-9, wherein the concentrate is packaged in cup or tub with a seal.

11. Process for preparing a packaged concentrate for preparing a bouillon, broth, soup, sauce, gravy or for use as a seasoning, said concentrate comprising:
- 20-80% water (weight % based on total packaged concentrate),
- 0.8% to 4%, preferably 0.9%-2%, more preferably 1-1.5% (weight % based on water content of concentrate) of a gelling agent comprising konjac mannan and optionally one or more other gelling agents,
- 3-30% (weight % based on water content of concentrate), more preferably 15-30%, most preferably 15-26% of salt,
- 0.5-60% (weight % based on the total composition) of taste imparting components,
- and wherein the concentrate has the appearance of a gel,
the process comprising the steps of mixing all ingredients, filling the mixture into the packaging or moulds, closing the packaging, whereby a heating step is applied prior to, and/or during and/or after filling into the packaging or moulds; and wherein the concentrate has the rheology of a gel.

12. Use of a concentrate according to any of claims 1-10, for preparing a bouillon, broth, soup, sauce, gravy or for use as a seasoning.

## Patentansprüche

1. Abgepacktes Konzentrat zur Herstellung einer Bouillon, einer Brühe, einer Suppe, einer Soße, eines Bratensafts oder zur Verwendung als Würze, wobei das Konzentrat umfasst:
- 20-80% Wasser (Gewichts-%, bezogen auf das ganze abgepackte Konzentrat),
- 0,8% bis 4%, vorzugsweise 0,9% bis 2%, bevorzugter 1-1,5% (Gewichts-%, bezogen auf den Wassergehalt des Konzentrats) eines Geliermittels, das Konjac-Mannan und gegebenenfalls ein anderes Geliermittel oder mehrere andere Geliermittel umfasst,
- 15-30% (Gewichts-%, bezogen auf den Wassergehalt des Konzentrats) Salz,
- 0,5-60% (Gewichts-%, bezogen auf die ganze Zusammensetzung) Geschmack verleihender Komponenten und wobei das Konzentrat die Rheologie eines Gels aufweist.

2. Abgepacktes Konzentrat gemäß Anspruch 1, wobei das Konzentrat das Aussehen oder die Rheologie eines Gels hat, wie es/sie durch das Verhältnis von Elastizitätsmodul G' : viskoser Modul (Verlustmodul) G" von wenigstens 1, vorzugsweise wenigstens 3, ausgedrückt wird.

3. Abgepacktes Konzentrat gemäß einem der Ansprüche 1-2, wobei der viskose Modul G" wenigstens 10 Pa ist.

4. Abgepacktes Konzentrat gemäß einem der Ansprüche 1-3, wobei das andere Geliermittel aus der Gruppe, bestehend aus Agar, Carrageenan, Xanthan-Gellan, Stärke, ausgewählt ist.

5. Abgepacktes Konzentrat gemäß einem der Ansprüche 1-4, wobei außer Konjac-Mannan ein anderes Geliermittel vorliegt, wobei Konjac-Mannan und das andere Geliermittel jeweils in einer Menge von 15-85%, bezogen auf die Gesamtmenge an Konjac-Mannan + anderem Geliermittel, vorliegen, und wobei die Menge an Konjac-Mannan wenigstens 0,5% (Gewichts-%, bezogen auf den Wassergehalt des Konzentrats) ist.

6. Abgepacktes Konzentrat gemäß einem der Ansprüche 1-6, wobei die Geschmack verleihenden Komponenten eines oder mehrere von flüssigen oder lösbaren Extrakten oder Konzentraten von einem oder mehreren von Fleisch, Fisch, Kräutern, Früchten oder Gemüsen und/oder Aromastoffen und /oder Hefeextrakt und/oder hydrolysiertem Protein mit Herkunft von Gemüse, Soja, Fisch oder Fleisch und/oder Kräutern, Gemüsen, Früchten, Fleisch, Fisch, Krustentieren oder partikulären Materialien davon umfassen.

7. Abgepacktes Konzentrat gemäß einem der Ansprüche 1-6, wobei der Gesamtfeuchtigkeitsgehalt des Konzentrats 40-60 Gewichts-% (bezogen auf das ganze abgepackte Konzentrat) ist.

8. Abgepacktes Konzentrat gemäß einem der Ansprüche 1-7, wobei das Konzentrat eine Wasseraktivität a_{w} von 0,6 bis 0,87, vorzugsweise von 0,7-0,78, hat.

9. Abgepacktes Konzentrat gemäß einem der Ansprüche 1-8, das außerdem 1-30%, vorzugsweise 1-15% (Gewichts-%, bezogen auf das gesamte abgepackte Konzentrat) an emulgiertem Öl und/oder Fett umfasst.

10. Abgepacktes Konzentrat gemäß einem der Ansprüche 1-9, wobei das Konzentrat in einem Becher oder einem Bottich mit einer Versiegelung abgepackt ist.

11. Verfahren zur Herstellung eines Konzentrats zur Herstellung einer Bouillon, einer Brühe, einer Suppe, einer Soße, eines Bratensafts oder zur Verwendung als Würze, wobei das Konzentrat umfasst:
- 20-80% Wasser (Gewichts-%, bezogen auf das ganze abgepackte Konzentrat),
- 0,8% bis 4%, vorzugsweise 0,9% bis 2%, bevorzugter 1-1,5% (Gewichts-%, bezogen auf den Wassergehalt des Konzentrats) eines Geliermittels, das Konjac-Mannan und gegebenenfalls ein anderes Geliermittel oder mehrere andere Geliermittel umfasst,
- 3-30% (Gewichts-%, bezogen auf den Wassergehalt des Konzentrats), bevorzugter 15-30%, höchst bevorzugt 15-26% Salz,
- 0,5-60% (Gewichts-%, bezogen auf die ganze Zusammensetzung) Geschmack verleihender Komponenten
und wobei das Konzentrat das Aussehen eines Gels hat, wobei das Verfahren die Schritte Mischen aller Inhaltsstoffe, Füllen des Gemisches in die Verpackung oder in Formen, Verschließen der Verpackung umfasst, wobei ein Erwärmungsschritt vor und/oder während und/oder nach dem Füllen in die Verpackung oder die Formen angewendet wird; und wobei das Konzentrat die Rheologie eines Gels aufweist.

12. Verwendung eines Konzentrats gemäß einem der Ansprüche 1-10 zur Herstellung einer Bouillon, einer Brühe, einer Suppe, einer Soße, eines Bratensafts oder zur Verwendung als Würze.

## Revendications

1. Concentré conditionné pour la préparation d'un bouillon, d'un potage, d'une soupe, d'une sauce, d'un jus ou destiné à être utilisé en tant qu'assaisonnement, ledit concentré comprenant :
- 20 à 80 % d'eau (% en poids sur la base du concentré conditionné total),
- 0,8 % à 4 %, de préférence 0,9 % à 2 %, plus préférablement 1 à 1,5 % (% en poids sur la base de la teneur en eau du concentré) d'un agent gélifiant comprenant du mannane de konjac et optionnellement un ou plusieurs autres agents gélifiants,
- 15 à 30 % (% en poids sur la base de la teneur en eau du concentré) de sel,
- 0,5 à 60 % (% en poids sur la base de la composition totale) de composants donnant du goût et dans lequel le concentré a la rhéologie d'un gel.

2. Concentré conditionné selon la revendication 1, dans lequel le concentré a l'apparence ou la rhéologie d'un gel exprimé par un rapport du module élastique G' au module visqueux G" d'au moins 1, de préférence d'au moins 3.

3. Concentré conditionné selon l'une quelconque des revendications 1 à 2, dans lequel le module visqueux G" est d'au moins 10 Pa.

4. Concentré conditionné selon l'une quelconque des revendications 1 à 3, dans lequel les un ou plusieurs autres agents gélifiants sont choisis dans le groupe constitué par : l'agar-agar, le carraghénane, le xanthane, le gellane, l'amidon.

5. Concentré conditionné selon l'une quelconque des revendications 1 à 4, dans lequel outre le mannane de konjac, un autre agent gélifiant est présent, le mannane de konjac et l'autre agent gélifiant étant chacun présents en une quantité de 15 à 85 % de la quantité totale du mannane de konjac + un autre agent gélifiant, et dans lequel la quantité de mannane de konjac est d'au moins 0,5 % (% en poids sur la base de la teneur en eau du concentré).

6. Concentré conditionné selon l'une quelconque des revendications 1 à 5, dans lequel les composants donnant du goût comprennent un ou plusieurs extraits ou concentrés liquides ou solubles d'un ou plusieurs parmi des viandes, poissons, herbes, fruits ou légumes, et/ou arômes, et/ou extrait de levure, et/ou protéine hydrolysée provenant de légumes, de soja, de poissons ou de viandes et/ou des herbes, des légumes, des fruits, des viandes, des poissons, des crustacés ou des produits particulaires de ceux-ci.

7. Concentré conditionné selon l'une quelconque des revendications 1 à 6, dans lequel la teneur totale en eau du concentré est de 40 à 60 % en poids (sur la base du concentré conditionné total).

8. Concentré conditionné selon l'une quelconque des revendications 1 à 7, dans lequel le concentré a une activité de l'eau a_{w} de 0,5 à 0,87, de préférence de 0,7 à 0,78.

9. Concentré conditionné selon l'une quelconque des revendications 1 à 8, dans lequel le concentré comprend en outre 1 à 30 %, de préférence 1 à 15 % (% en poids sur la base du concentré conditionné total) d'huile et/ou de graisse émulsifiée.

10. Concentré conditionné selon l'une quelconque des revendications 1 à 9, dans lequel le concentré est conditionné dans un gobelet ou un pot avec une fermeture hermétique.

11. Procédé de préparation d'un concentré conditionné pour la préparation d'un bouillon, d'un potage, d'une soupe, d'une sauce, d'un jus ou destiné à être utilisé en tant qu'assaisonnement, ledit concentré comprenant :
- 20 à 80 % d'eau (% en poids sur la base du concentré conditionné total),
- 0,8 % à 4 %, de préférence 0,9 % à 2 %, plus préférablement 1 à 1,5 % (% en poids sur la base de la teneur en eau du concentré) d'un agent gélifiant comprenant du mannane de konjac et optionnellement un ou plusieurs autres agents gélifiants,
- 3 à 30 % (% en poids sur la base de la teneur en eau du concentré), de préférence 15 à 30 %, plus préférablement 15 à 26 % de sel,
- 0,5 à 60 % (% en poids sur la base de la composition totale) de composants donnant du goût,
- et dans lequel le concentré a l'apparence d'un gel,
le procédé comprenant les étapes de mélange de tous les ingrédients, chargement du mélange dans l'emballage ou les moules, fermeture de l'emballage, moyennant quoi une étape de chauffage est appliquée avant et/ou pendant et/ou après le chargement dans l'emballage ou les moules ; et dans lequel le concentré a la rhéologie d'un gel.

12. Utilisation d'un concentré selon l'une quelconque des revendications 1 à 10, pour la préparation d'un bouillon, d'un potage, d'une soupe, d'une sauce, d'un jus ou destiné à être utilisé en tant qu'assaisonnement.
